# EUROPEAN PATENT APPLICATION

(11) **EP 4 082 714 A1**
(43) Date of publication of application: **02.11.2022**
(21) Application number: 22169025.8
(22) Date of filing: 20.04.2022
(51) Int. Cl.: B23Q 1/00

(54) **PIN FOR LOCKING WORKPIECES, PARTICULARLY MOLDS, THAT ARE ADAPTED TO BE MACHINED ON MACHINE TOOLS**

(30) Priority: 27.04.2021 IT 202100010523
(71) Applicant: Officina Meccanica Lombarda S.r.l., 10040 Caprie TO (IT)
(72) Inventor: ROLANDI, Andrea, 27040 MONTALTO PAVESE PV (IT)
(74) Representative: Modiano, Micaela Nadia

(57) **Abstract**

A support (14) extending about an axis (A) has an axial cavity (16), adapted to receive a pin (12) fixed to the workpiece (W), and has retention means for retaining the pin (12) axially.

Interposed between the pin (12) and the workpiece (W) is a centering ring (25) which is accommodated in the axial cavity (16) in such a way that it can slide on a plane that is perpendicular to the axis of the pin (12) with respect to the support (14).

## Description

The present invention relates to a pin for locking workpieces, in particular molds, that are adapted to be machined on machine tools.

As is known, workpieces intended to be machined on machine tools can be fixed on a platform - which in turn is installed in the work area of the machine tool - by way of a series of locking devices.

In particular, each one of the locking devices can comprise a hollow cylindrical support which is fixed at right angles to the platform and is provided with retention means for receiving and axially retaining a pin which is screwed onto the workpiece.

The retention means generally comprise elements that can slide radially in the hollow cylindrical support between an open position, in which they free up the cavity of the hollow cylindrical support, allowing the insertion and the extraction of the pin, and a closed position, in which they engage a circumferential groove of the pin that has been inserted in the hollow cylindrical support, so as to axially retain it.

As is known, some workpieces, in particular molds, can be subjected to initial machining for roughing, and then a heat treatment step (tempering), and finally to machining for finishing.

During the heat treatment, the workpiece can be deformed to the point that the subsequent repositioning for the finishing operations is prevented, because the pins are no longer aligned with the corresponding hollow cylindrical supports.

Pins are known that are capable of compensating for angular misalignments between the axis of the pin and the axis of the hollow cylindrical support.

Pins are also known that are capable of compensating for misalignments on the plane that is perpendicular to the axis of the hollow cylindrical support.

To date, however, no pins are known that are capable of compensating for both of the above mentioned possible misalignments.

Therefore, the main aim of the present invention is to provide a pin for locking workpieces, in particular molds, that are adapted to be machined on machine tools, that is capable of compensating for all misalignments that are generated as a result of the heat treatments, in particular, angular misalignments between the axis of the pin and the axis of the hollow cylindrical support and misalignments on the plane that is perpendicular to the axis of the hollow cylindrical support.

The above aim and other advantages, which will become clearer from the description that follows, are achieved by a pin having the characteristics recited in the appended claim 1, while the appended dependent claims define other characteristics of the invention which are advantageous, although secondary.

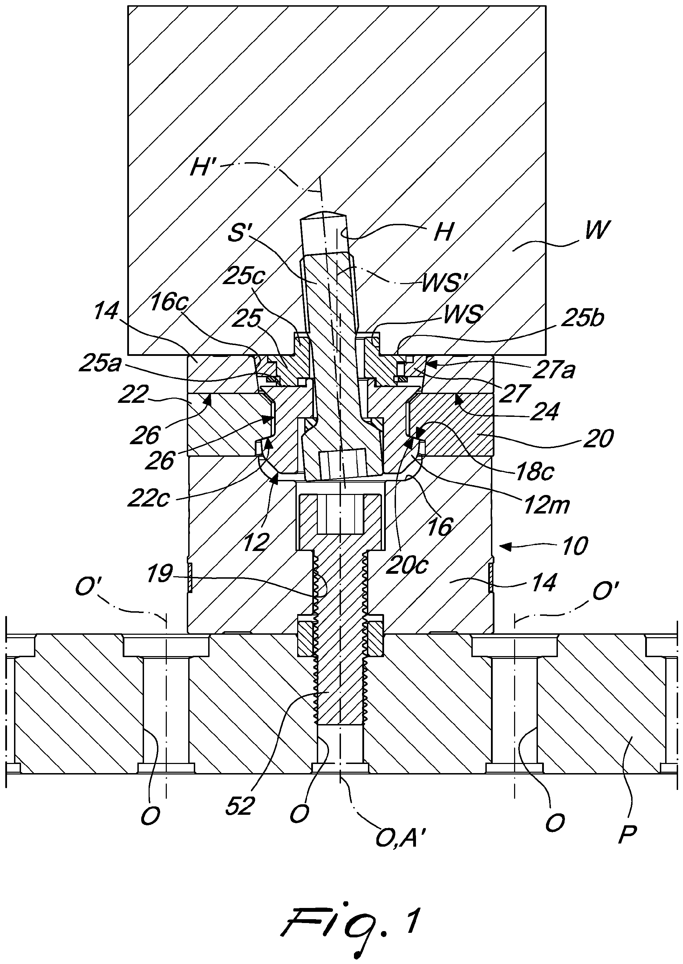

Now the invention will be described in more detail, with reference to a preferred but not exclusive embodiment thereof, which is illustrated for the purposes of non-limiting example in Figure 1, which is an axial cross-sectional view of a locking device cooperating with a locking pin according to the invention, in an operating configuration.

With reference to the figure, the reference numeral 10 generally designates a locking device for workpieces that are adapted to be machined on machine tools and machining centers.

In particular, with reference to Figure 1, a series of locking devices 10, e.g., four locking devices, can be used for positioning and locking in place a generic workpiece W on a platform P installed in the working area of the machine tool (not shown) and conventionally provided with a grid of threaded openings O, the longitudinal axis of which is designated with O'.

Each one of the locking devices 10 is adapted to receive and retain a pin 12 fixed to the workpiece W. In a per se known manner, the pin 12 is hollow and fixed to the workpiece W by way of a first screw S' inserted in the pin 12 and screwed into a threaded hole H that has been previously provided on the workpiece W, the longitudinal axis of which is designated with H'.

The locking device 10, which lies outside the scope of the present invention and can be conventional, comprises a support 14 extending about an axis A, which has an axial cavity 16 for receiving the pin 12. The support 14 has a substantially cylindrical profile and is conventionally provided with retention means for retaining the pin 12 axially, by engaging a circumferential groove 18 provided on a main body 12m of said pin.

In a per se known manner, the support 14 is fixed perpendicularly to the platform P by means of a second screw S2 which is inserted in a respective axial seat 19 of the support 14 and screwed into one of the threaded openings O of the platform P in such a manner that the longitudinal axis A of the support 14 is coaxial with the longitudinal axis O' of the corresponding threaded opening O.

The retention means generally comprise locking elements 20, 22 which, controlled by actuation means (not shown), can slide in respective seats 24, 26 of the support 14 in order to translate radially between an open position, in which they do not interfere with the insertion and the extraction of the pin 12, and a closed position, in which they engage the circumferential groove 18 of the pin 12 that has been inserted into the support 14 so as to retain it axially.

The number and the shape of the locking elements can vary according to necessity. In the embodiment described herein for the purposes of example, there are two locking elements in mutually opposite positions, which can be shaped like an annular sector.

The actuation means can comprise threaded elements and the like.

In a per se known manner, the groove 18 is delimited in a downward region, that is to say, on the side of the free end of the pin 12, by a frustum-shaped annular wall 18c which, when locked in place, is engaged by respective frustum-shaped internal edges 20c, 22c of the locking elements 20, 22.

According to the invention, a centering ring 25 is accommodated in the axial cavity 16, fitted, with play, over the first screw S' so as to be interposed between the pin 12 and the workpiece W and so as to be able to slide on a plane that is perpendicular to the axis of the pin 12 with respect to the support 14.

Conveniently, this centering ring 25 has two axially mutually opposite resting surfaces 25a and 25b, which are mutually parallel and are respectively adapted to abut against the pin 12 and against the workpiece W.

At the contact surface 25b, a cylindrical protrusion 25c rises integrally from the centering ring 25 and is adapted to engage a corresponding counterbore WS provided on the workpiece W at the entry point of the threaded hole H and the longitudinal axis of which is designated with WS'.

Furthermore, a locking ring 27 is fitted over the centering ring 25 with play and has a frustum-shaped surface 27a adapted to engage a corresponding frustum-shaped inlet 16c of the axial cavity 16 for centering purposes.

In operation, in a per se known manner, once the number of necessary locking devices 10 has been established together with their positions, for each one a threaded hole H is created on the workpiece W and a pin 12 is fixed thereto by way of the first screw S', ensuring that the locking ring 27 is correctly assembled on the centering ring 25 which in turn is fitted over the first screw S' with play. Also in a conventional manner, the support 14 is fixed to one of the threaded openings O of the platform P with the second screw S2.

Since the workpiece W can be subjected to heat treatments, such as tempering or the like, in order to then be subsequently machined for the finishing operations, the workpiece W can be subjected to geometric deformations that are such as to alter the orientation of the longitudinal axis H' of the threaded hole H with respect to its nominal orientation.

With particular reference to Figure 1, a possible deformation of the threaded hole H is shown by way of example, in which the longitudinal axis H' has undergone a major angular misalignment toward the left-hand side of the figure with respect to the ideal orientation, which should be substantially coaxial to the longitudinal axis O' of the threaded opening O.

At this point, with the locking elements 20, 22 in the open configuration, in which they leave the axial cavity substantially free, the workpiece W is placed on the supports 14 fixed to the platform P, inserting the pins 12 into the axial cavities 16.

After this, the locking devices 10 are tightened so as to close the locking elements 20, 22 around the pin 12. The frustum-shaped internal edges 20c, 22c of the locking elements 20, 22 engage the frustum-shaped annular wall 18c of the groove 18 so as to axially bias the pin 12 toward the inside of the cylindrical support 14, with the frustum-shaped portion 27a of the locking ring 27 engaging the frustum-shaped inlet 16c thus ensuring the perfect centering of the latter and of the pin 12 in the axial cavity 16.

As illustrated in Figure 1, the inner faces of the locking elements 20, 22 do not come into contact with the groove 18. In this manner, the axial clamping action carried out by the locking elements 20, 22 does not interfere with the centering action just described, thus allowing transverse translations of the first screw S', and therefore of the workpiece W, in order to compensate for the geometric deformations described previously.

In fact, with a traditional fixing system, tensions would be created both on the workpiece and on the fixing module, but instead, by virtue of the transverse translation allowed by the freedom of flotation of the centering ring 25 comprised between the pin 12 and the locking ring 27, these tensions can be automatically canceled out.

In practice it has also been found that the invention fully achieves the set aims.

In particular, the pin is capable of compensating for all misalignments that are generated as a result of the heat treatments, in particular, angular misalignments between the axis of the pin and the axis of the hollow cylindrical support and misalignments on the plane that is perpendicular to the axis of the hollow cylindrical support.

A preferred embodiment of the invention has been described, but obviously the person skilled in the art may make various modifications and variations within the scope of protection of the claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. 102021000010523 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. A pin for locking workpieces (W) that are adapted to be machined on machine tools, of the type adapted to be fixed to the workpiece (W) and inserted in a support (14) that extends around an axis (A) and is provided with an axial cavity (16) adapted to receive said pin (12), said support (14) being provided with retention means for axially retaining said pin (12) by engaging a circumferential groove (18) thereof, **characterized in that** it comprises:
- a centering ring (25) accommodated in said axial cavity (16) and adapted to be interposed between said workpiece (W) and a main body (12m) of said pin (12) provided with said circumferential groove (18), said centering ring (25) being able to slide on a plane that is perpendicular to the axis of said pin (12) with respect to said main body;
- a locking ring (27) fitted over said centering ring (25) with play and having a frustum-shaped surface (27a) adapted to engage a corresponding frustum-shaped inlet (16c) of said axial cavity (16) following the engagement of said retention means (20, 22) in said circumferential groove (18).

2. The device according to claim 1, **characterized in that** said centering ring (25) has two axially mutually-opposite resting surfaces (25a, 25b), which are mutually parallel and are respectively adapted to abut against said main body (12m) of said pin (12) and against said workpiece (W).

3. The locking device according to claim 2, **characterized in that** it comprises a cylindrical protrusion (25c) protruding integrally from one of said resting surfaces (25b), which is intended to abut against said workpiece (W), and adapted to engage a corresponding counterbore (WS) provided on said workpiece (W) at the entry point of a threaded hole (H).
